# EUROPEAN PATENT APPLICATION

(11) **EP 3 136 825 A1**
(43) Date of publication of application: **01.03.2017**
(21) Application number: 16183841.2
(22) Date of filing: 11.08.2016
(51) Int. Cl.: H05B 33/08

(54) **LED RETROFIT LIGHTING DEVICE AND METHOD OF OPERATING THE SAME**

(30) Priority: 31.08.2015 JP 2015170316
(71) Applicant: Ricoh Company, Ltd., Tokyo 143-8555 (JP)
(72) Inventor: UKEGAWA, Takeshi, Tokyo 143-8555 (JP); KURIKI, Shoji, Tokyo 143-8555 (JP); NISHI, Ryohsuke, Tokyo 143-8555 (JP); SHIRAI, Taroh, Tokyo 143-8555 (JP)
(74) Representative: Leeming, John Gerard

(57) **Abstract**

An illuminating lamp (100) includes a rectifier (102) that performs full-wave rectification of an input from a fluorescent lamp ballast (203), a lighting unit that controls lighting of a semiconductor light-emitting element part (160), and a current value detector (170, 150) that detects a current value of current flowing through the semiconductor light-emitting element part (160). The lighting unit includes an input smoothing capacitor (103 (C1)), a switching circuit (110), and a controller (150). The input smoothing capacitor (103 (C1)) smooths an input from the rectifier (102), the input smoothing capacitor (103 (C1)) being on/off controllable. The switching circuit (110) at least includes a switching inductor (111 (L1)) provided to be bypass-on/offswitchable, a switching smoothing capacitor (115 (C2)) connected in parallel with the semiconductor light-emitting element part (160), and a switching element (114 (Q4)) that controls current flowing through the semiconductor light-emitting element part (160). The controller (150) turns on the input smoothing capacitor (103 (C1)) and turns off bypassing of the switching inductor (111 (L1)) after the semiconductor light-emitting element part (160) is lighted, the input smoothing capacitor (103 (C1)) being off and bypassing of the switching inductor (111 (L1)) being on at start of the lighting, and determines a lighting condition by performing PWM control of the switching element (114 (Q4)).

## Description

### BACKGROUND

### Technical Field

The present invention relates to an illuminating lamp, a lighting device, and a method of lighting an illuminating lamp.

### Description of the Related Art

Illuminating lamps that are directly connectable to an inverter ballast (a lamp fitting in a broad sense) for lighting a fluorescent lamp are known. These illuminating lamps include those that use a semiconductor light-emitting element, such as a light-emitting diode (LED) lamp.

An LED lamp has a higher light-emitting efficiency than a fluorescent lamp, and accordingly is capable of producing brightness equivalent to that produced by a fluorescent lamp, with less power consumption than that consumed by a fluorescent lamp. If an LED lamp is directly connected to a lamp fitting for lighting, the lamp fitting supplies the LED lamp with power equivalent to that in the case where a fluorescent lamp is connected, and accordingly excessive power consumption occurs in an LED load of the LED lamp.

Therefore, the following power-saving technology is known in such LED lamps (so-called construction-free LED lamps). That is, an inductance is connected to an LED load to generate reactive power in the LED lamp, thereby reducing power consumption (for example, see JP-2011-243331-A and Japanese Patent No. 5266594).

Japanese Patent No. 5266594 discloses an LED lamp capable of switching between the case of performing pulse-width modulation (PWM) control of current flowing through an LED light-emitting part and the case of not performing PWM control. In the case of not performing PWM control, the magnitude of direct current (DC) flowing through the LED light-emitting part is detected, and the inductance value of a variable inductance part is changed in accordance with the magnitude of the DC.

Inverter ballasts connected to LED lamps have various specifications and characteristics, such as an active power constant type, an apparent power constant type, and a constant current type. Therefore, it is desirable to be compatible with inverter ballasts with various characteristics.

However, the technology described in Japanese Patent No. 5266594 is a method of increasing reactive power and is thus useful only in an apparent-power-constant-type inverter. Since it is necessary to have two lighting units for performing PWM control and for performing inductance-value changing control, the circuit configuration becomes complicated, resulting in a higher cost.

### SUMMARY

Example embodiments of the present invention include an illuminating lamp, which includes a rectifier that performs full-wave rectification of an input from a fluorescent lamp ballast, a lighting unit that controls lighting of a semiconductor light-emitting element part, and a current value detector that detects a current value of current flowing through the semiconductor light-emitting element part. The lighting unit includes an input smoothing capacitor, a switching circuit, and a controller. The input smoothing capacitor smooths an input from the rectifier, the input smoothing capacitor being on/off controllable. The switching circuit at least includes a switching inductor provided to be bypass-on/off switchable, a switching smoothing capacitor connected in parallel with the semiconductor light-emitting element part, and a switching element that controls current flowing through the semiconductor light-emitting element part. The controller turns on the input smoothing capacitor and turns off bypassing of the switching inductor after the semiconductor light-emitting element part is lighted, the input smoothing capacitor being off and bypassing of the switching inductor being on at start of the lighting, and determines a lighting condition by performing PWM control of the switching element.

According to an embodiment of the present invention, with the use of a simple configuration, appropriate lighting control can be performed in accordance with inverter ballasts with various characteristics.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is an external perspective view of a lighting device according to an embodiment;
FIG. 2 is a cross-section, taken along the longitudinal direction, of a lamp fitting included in the lighting device illustrated in FIG. 1;
FIG. 3 is an exploded perspective view of a portion near an end on the left side, from the point of view of an observer in the longitudinal direction, of an illuminating lamp illustrated in FIG. 1;
FIG. 4 is an exploded perspective view of a portion near an end on the right side, from the point of view of an observer in the longitudinal direction, of the illuminating lamp illustrated in FIG. 1;
FIG. 5 is an exploded perspective view (enlarged view) of a portion near an end on the left side, from the point of view of an observer in the longitudinal direction, of the illuminating lamp illustrated in FIG. 1;
FIG. 6 is an exploded perspective view (enlarged view) of a portion near an end on the right side, from the point of view of an observer in the longitudinal direction, of the illuminating lamp illustrated in FIG. 1;
FIG. 7 is a transverse cross-section of the illuminating lamp illustrated in FIG. 1;
FIG. 8 is a block diagram of the lighting device illustrated in FIG. 1;
FIG. 9 is a circuit diagram of an inverter, an illuminating circuit, and a semiconductor light-emitting element part illustrated in FIG. 8;
FIGs. 10A and 10B (FIG. 10) are a flowchart illustrating an example of a lighting condition determining process; and
FIG. 11 is a flowchart illustrating an example of a lighting process after a lighting condition is determined.

The accompanying drawings are intended to depict example embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

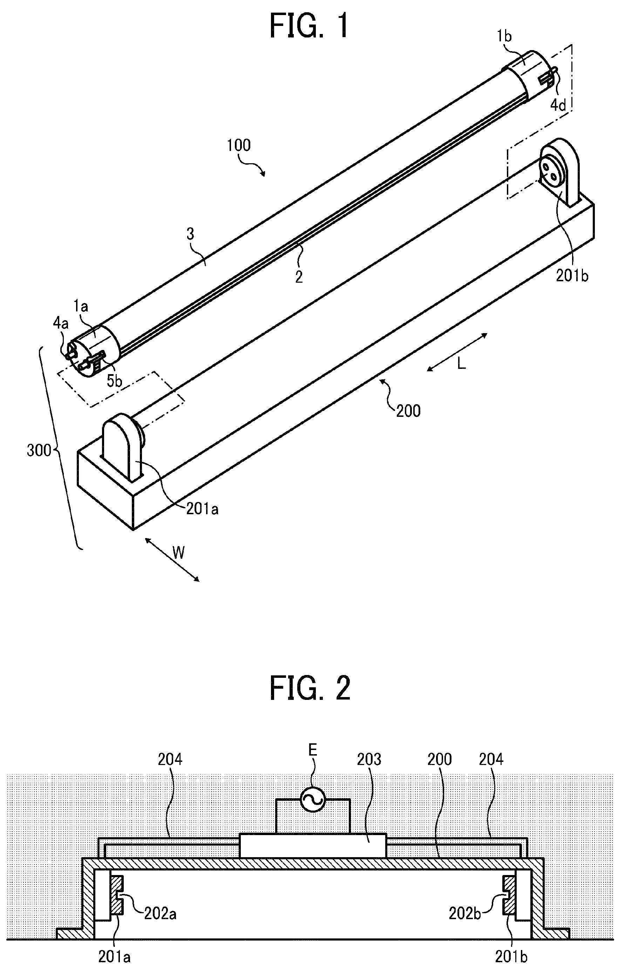

Hereinafter, a configuration according to an embodiment of the present invention will be described referring to FIGs. 1 to 11. In the drawings, the longitudinal direction is denoted by L, and the width direction is denoted by W.

### Lighting Device

At first, the configuration of a lighting device will be described with reference to FIGs. 1 to 7. FIG. 1 is an external perspective view of a lighting device 300. As illustrated in FIG. 1, the lighting device 300 includes an illuminating lamp 100, and a lamp fitting 200 to which the illuminating lamp 100 is mounted.

The illuminating lamp 100 includes cap members 1a and 1b, a casing 2, and a light-transmissive member 3. The casing 2 has a long shape molded by extruding a metal member, such as an aluminum alloy or a magnesium alloy. The casing 2 is formed so that its cross section has a substantially semi-circular and cylindrical shape. The light-transmissive member 3 has a long and substantially semi-circular and cylindrical shape, like the casing 2, so as to have, in combination with the casing 2, a substantially cylindrical shape in entirety. The light-transmissive member 3 is formed of resin or glass so that light beams emitted by a plurality of LEDs, which will be described later, pass through the light-transmissive member 3.

The cap members 1a and 1b have a bottomed cylindrical shape and function as caps of two ends of the casing 2 and the light-transmissive member 3. When mounted on sockets 201a and 201b of the lamp fitting 200, the cap members 1a and 1b establish physical and electrical connection between the lamp fitting 200 and the illuminating lamp 100. Although the casing 2 is described in this example as having a substantially semi-circular and cylindrical shape, the shape of the casing 2 is not limited to this shape. Although the light-transmissive member 3 is illustrated as being semi-circular in FIG. 1, the configuration may be, for example, one in which the cross-section is cylindrical, like a fluorescent lamp, and the light-transmissive member 3 encloses the casing 2.

FIG. 2 is a cross-section, taken along the longitudinal direction, of the lamp fitting 200. As illustrated in FIG. 2, the lamp fitting 200 includes an inverter (fluorescent lamp ballast, inverter ballast) 203, and the sockets 201a and 201b to which the illuminating lamp 100 is removably mounted. The lamp fitting 200 is configured to be connectable to a commercial power supply E. The frequency of the commercial power supply E is 50 Hz or 60 Hz, for example. Power from the commercial power supply E is supplied to the inverter 203. As illustrated in FIG. 2, the lamp fitting 200 is such that the side opposite to the sockets 201a and 201b is embedded in a ceiling or the like, and the side on which the sockets 201a and 201b are provided is open. The sockets 201a and 201b are connected to the inverter 203 via a pair of electrode terminals 202a and 202b and wiring 204.

The inverter 203 generates a signal for lighting the illuminating lamp 100. The inverter 203 operates so as to adjust its frequency and output power depending on the type of the illuminating lamp 100, and which enables the illuminating lamp 100 to be lighted in a stable manner.

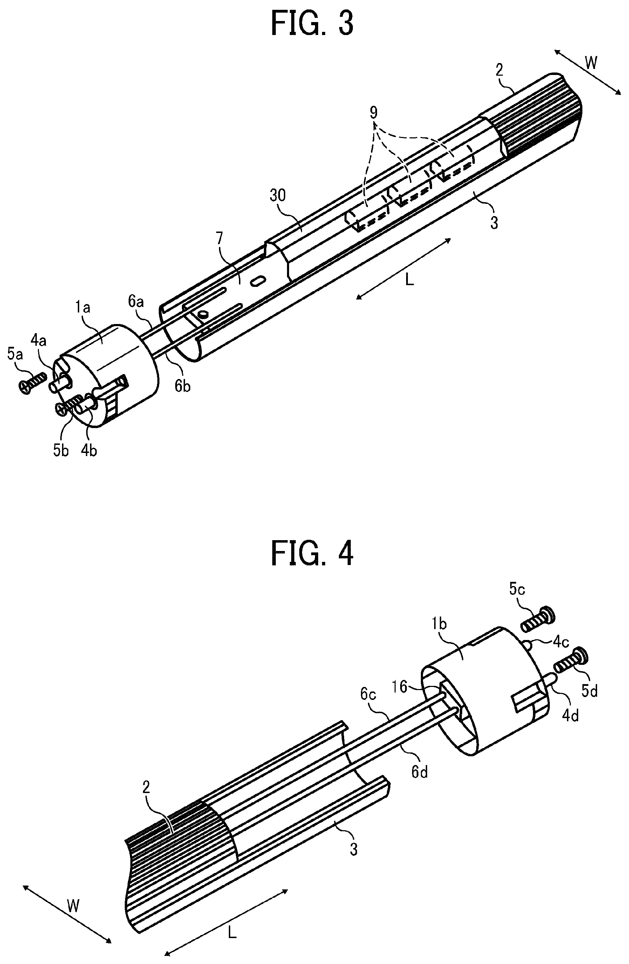

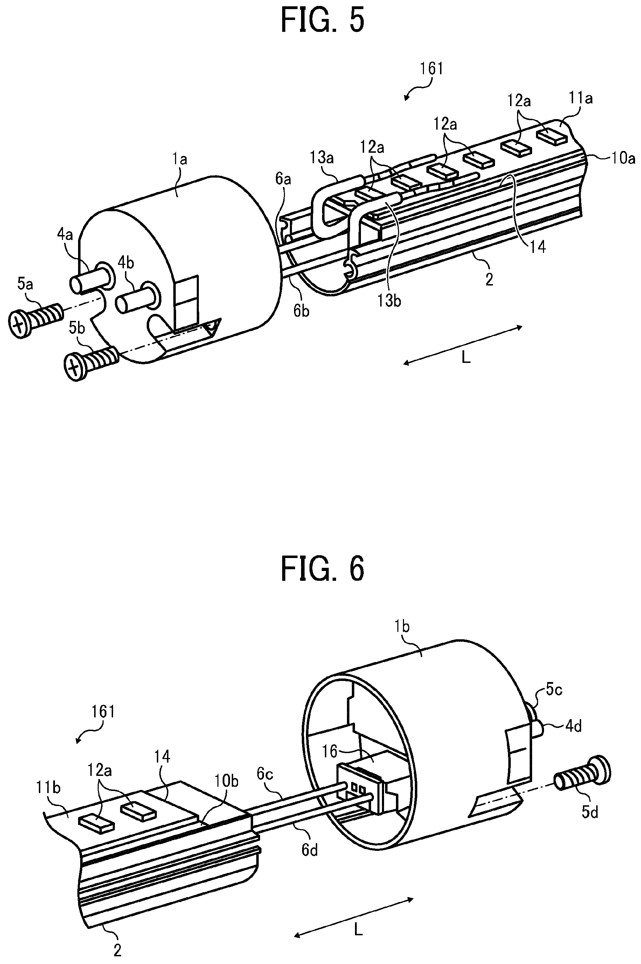

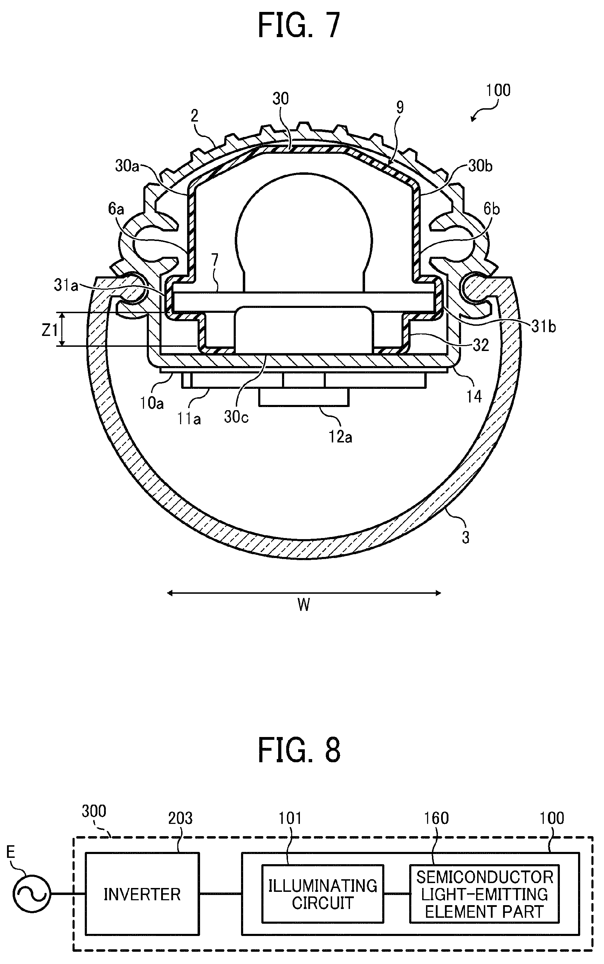

FIGs. 3 and 5 are exploded perspective views of a portion near an end on the left side, from the point of view of an observer in the longitudinal direction, of the illuminating lamp 100. FIGs. 4 and 6 are exploded perspective views of a portion near an end on the right side, from the point of view of an observer in the longitudinal direction, of the illuminating lamp 100. FIG. 7 is a transverse cross-section of the illuminating lamp 100. Note that FIG. 3 omits an illustration of a mounting substrate 11a arranged above a power supply substrate 7, but FIG. 5 illustrates the mounting substrate 11a. Similarly, FIG. 4 omits an illustration of a mounting substrate 11b, but FIG. 6 illustrates the mounting substrate 11b.

As illustrated in FIGs. 3 and 4, the cap members 1a and 1b are tightly fixed to the casing 2 by a plurality of screws 5a, 5b, 5c, and 5d. Accordingly, the cap members 1a and 1b enclose the casing 2 and the light-transmissive member 3 so that the casing 2 and the light-transmissive member 3, which fit with the each other, are integrated with each other. In short, the cap members 1a and 1b are formed and provided to cover two ends of the casing 2 and the light-transmissive member 3.

The cap members 1a and 1b may be manufactured by tightly fastening the cap members 1a and 1b to a gap with the casing 2 with a tool or the like (caulking) instead of using screws, or may be insert-molded. The shape of the cap members 1a and 1b is substantially identical to cap members positioned at two ends of an existing fluorescent lamp. The illuminating lamp 100 is easily exchangeable with an existing fluorescent lamp mounted on the lamp fitting 200.

As illustrated in FIGs. 3 to 6, one cap member 1a is provided with electrode terminals 4a and 4b, and the other cap member 1b is provided with electrode terminals 4c and 4d, which protrude from the cap member 1a or the cap member 1b along the longitudinal direction. To provide the cap member 1a or the cap member 1b with the electrode terminals 4a and 4b or 4c and 4d, respectively a fixing method such as insert-molding, caulking, or screw fastening can be used. The illuminating lamp 100 takes in alternating current (AC) power from the commercial power supply E via the lamp fitting 200, a connector 16 arranged in each of the cap members 1a and 1b, and the like. The taken-inAC power is supplied to the power supply substrate 7 illustrated in FIG. 7 via lead wires 6a, 6b, 6c, and 6d.

The power supply substrate 7 is provided with a DC power conversion electronic part 9 for converting the obtained AC power to DC power and supplying the DC power to the mounting substrates 11a and 11b. The mounting substrates 11a and 11b are each provided with an LED load 161 where a plurality of LEDs 12a are mounted in the longitudinal direction, as illustrated in FIGs. 5 and 6. An LED is an example of a semiconductor light-emitting element. The power supply substrate 7 is accommodated in the casing 2, which has a substantially semi-circular and cylindrical shape, as illustrated in FIG. 3, and is fixed so as not to move in the casing 2. In the case of the lighting device 300, the lead wires 6a and 6b are shorter than the lead wires 6c and 6d.

The DC current obtained by rectification performed by the electronic part 9 is supplied to the mounting substrates 11a and 11b via lead wires 13a and 13b illustrated in FIG. 5. The mounting substrates 11a and 11b, which are arranged in parallel with each other in the longitudinal direction, are electrically connected to each other by a lead wire, a jumper wire, or the like. Although the two mounting substrates 11a and 11b are illustrated as mounting substrates for mounting the LED loads 161 in this example, one mounting substrate or three or more mounting substrates may be provided.

As illustrated in FIGs. 5 and 6, in the case of the lighting device 300, the power supply substrate 7 is arranged below the mounting substrate 11 a, and nothing is arranged below the mounting substrate 11b. In other words, the side where there is the mounting substrate 11b is configured to be planar such that the casing 2 becomes hollow. The mounting substrates 11a and 11b are mounted to a planar part 14, which is a portion corresponding to the arc of the semi-circle of the casing 2. Between the planar part 14 and the mounting substrates 11a and 11b, sheet-shaped resin members 10a and 10b are arranged at respective positions so as to be sandwiched between the planar part 14 and the mounting substrates 11a and 11b.

The power supply substrate 7 whose two ends are connected to the lead wires 6a and 6b and the lead wires 6c and 6d, respectively, (See FIGs. 3 and 4) is surrounded by and covered with a holder 30, made of a resin, which serves as a cover member extending in the longitudinal direction, as illustrated in FIG. 7. Cap parts into which the connectors 16 are inserted are provided at the tip of the lead wire 6a and the lead wire 6b and at the tip of the lead wire 6c and the lead wire 6d. The holder 30 has a long shape with a length equivalent to or longer than the power supply substrate 7 and is a continuous cylindrical member whose cross-sectional shape has no breaks. The holder 30 can be formed by a molding method such as extrusion molding, pultrusion molding, or injection molding. For example, polycarbonate (PC) or polyamide (PA) (nylon) is used as the material of the holder 30.

The holder 30 can be accommodated in the casing 2, as illustrated in FIG. 7. The holder 30 has substantially the same cross-sectional shape along the longitudinal direction. The power supply substrate 7 is removably mounted on the holder 30, thereby being integrated with the holder 30.

That is, as illustrated in FIG. 7, on lateral faces 30a and 30b positioned in the width direction intersecting the longitudinal direction of the holder 30, cradle parts 31a and 31b are formed, extending in the width direction. These cradle parts 31a and 31b function as guide rail parts when the power supply substrate 7 is inserted into the holder 30 from its end. The cradle parts 31a and 31b support the power supply substrate 7 so that an alienation part (space part) 32 is formed between the power supply substrate 7 and a bottom 30c of the holder 30 after the power supply substrate 7 is inserted. The alienation part 32 is for securing a distance Z1 such that the lead wires of the electronic part 9 illustrated in FIG. 3 that are protruding from the power supply substrate 7 do not contact the holder 30, or electric insulation is secured.

The holder 30 covers the entirety (surrounding) of the power supply substrate 7 from the outside, thereby, in the casing 2, alienating the power supply substrate 7 from the casing 2. The holder 30 contacts the internal surface of the casing 2 in the casing 2, as illustrated in FIG. 7. The holder 30 has a surface that contacts the internal surface of the casing 2 as a smooth surface in order to be easily slidable in the casing 2. In the case of this example, the holder 30 has a cross-sectional shape having no breaks for dividing the holder 30. Therefore, to provide the power supply substrate 7 in the holder 30, the power supply substrate 7 is inserted into the holder 30 from an open end of the holder 30. The holder 30 and the power supply substrate 7 are integrated with each other and configured as a power substrate unit before being mounted in the casing 2, and, in this state of being the power substrate unit, are inserted into the interior of the casing 2 from an end of the casing 2.

As described above, the resin-made holder 30, which is accommodated in the casing 2, covers the surrounding of the power supply substrate 7, while alienating the power supply substrate 7 from the casing 2. The holder 30 has a cross-section substantially identical to the casing 2, and which extends in the longitudinal direction. With this configuration, electrical insulation of the power supply substrate 7 from the casing 2 is achieved, such that high-level of safety is secured. Since it is not necessary to coat the interior of the casing 2 with an insulating material in order to secure electrical insulation, the casing 2 can be manufactured at a low cost. Furthermore, since the interior of the casing 2 is alienated by the holder 30 between the power supply substrate 7 and the casing 2, even when the lead wires 13a and 13b of the electronic part 9 are protruding, no contact with the casing 2 is made, and the casing 2 can be manufactured without using expensive parts such as chip parts.

In the case of the lighting device 300, since the holder 30 (bottom 30c of the holder 30) is provided between the power supply substrate 7 and the mounting substrates 11a and 11b, heat of the power supply substrate 7 is less likely to be transferred to the mounting substrates 11a and 11b, and the influence of heat on each LED load 161 is uniform among all the LEDs. Therefore, the inconvenience that some LEDs have shorter life as time passes can be prevented.

Since the contact surface of the holder 30 integrated with the power supply substrate 7 is smooth, frictional resistance can be reduced, and the power substrate unit can slide in the casing 2. Therefore, the work of inserting the connectors 16 into the cap parts at two ends can be made easier.

Since the cross-sectional shape of the holder 30 has no breaks and is formed to be continuous, the electronic part 9 does not come into direct contact with the casing 2, thereby maintaining electrical insulation from the casing 2 and securing high-level of safety. Since it is not necessary to coat the interior of the casing 2 in order to secure electrical insulation, the casing 2 can be manufactured at a low cost.

### Illuminating Lamp

Now, an illumination lamp 100 is described according to the embodiment.

The illuminating lamp 100 according to the embodiment includes a rectifier (diode bridge 102) that performs full-wave rectification of an input from a fluorescent lamp ballast (inverter 203), a lighting unit that controls lighting of a semiconductor light-emitting element part (semiconductor light-emitting element part 160), and a current value detector (current-sense resistor 170 (R1), A/D converter 151) that detects the current value of current flowing through the semiconductor light-emitting element part. The lighting unit includes an input smoothing capacitor (first capacitor 103 (C1)) that smooths an input from the rectifier, the input smoothing capacitor being on/off controllable; a switching circuit (switching circuit 110) at least including a switching inductor (inductor 111 (L1)) provided to be bypass-on/off switchable, a switching smoothing capacitor (second capacitor 115 (C2)) connected in parallel with the semiconductor light-emitting element part, and a switching element (fourth transistor 114 (Q4)) that controls current flowing through the semiconductor light-emitting element part; and a controller (controller 150) that turns on the input smoothing capacitor and turns off bypassing of the switching inductor after the semiconductor light-emitting element part is lighted, the input smoothing capacitor being off and bypassing of the switching inductor being on at the start of the lighting, and that determines a lighting condition by performing PWM control of the switching element.

FIG. 8 is a schematic block diagram of the lighting device 300. The lighting device 300 includes the inverter 203, connected to the commercial power supply E, and the illuminating lamp 100, which receives AC power supplied from the inverter 203 and which lights on.

The illuminating lamp 100 includes an illuminating circuit 101, serving as a drive circuit for lighting the semiconductor light-emitting element part 160, and the semiconductor light-emitting element part 160 (LED load 161).

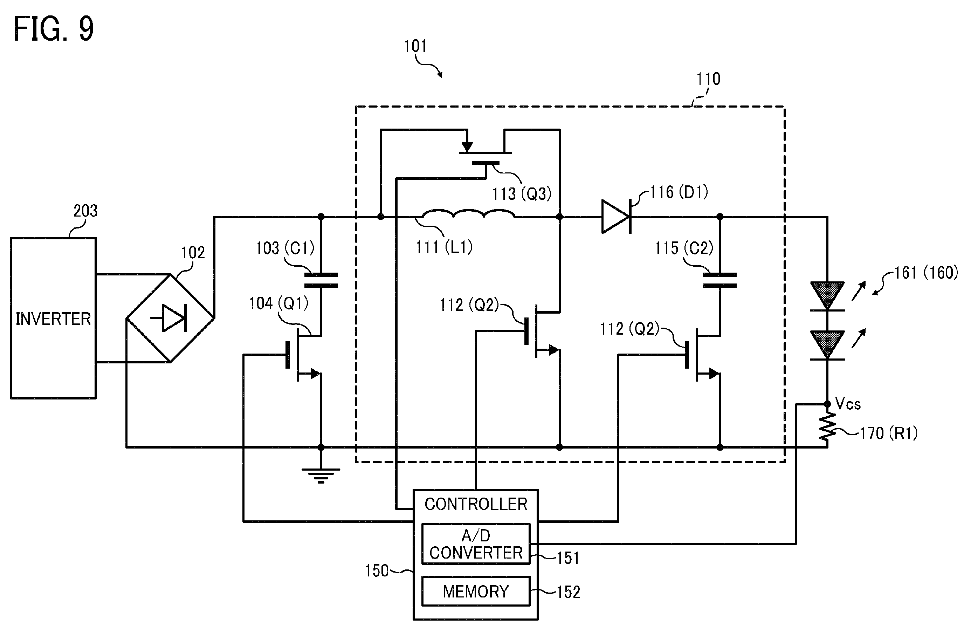

The circuit configuration of the illuminating lamp 100 will be described. FIG. 9 is a circuit diagram of the inverter 203, the illuminating circuit 101, and the semiconductor light-emitting element part 160. Note that the illuminating circuit 101 is provided on one of the mounting substrates 11a and 11b and the power supply substrate 7 of the illuminating lamp 100.

As illustrated in FIG. 9, the illuminating circuit 101 includes the diode bridge 102, the first capacitor 103 (C1), a first transistor 104 (Q1), the switching circuit 110, the controller 150, and the current-sense resistor 170 (R1).

In the illuminating circuit 101, the lighting unit for controlling lighting of the semiconductor light-emitting element part 160 includes the first capacitor 103, the first transistor 104, the switching circuit 110, and the controller 150.

The diode bridge 102 performs full-wave rectification of an AC signal from the inverter 203 to obtain a DC signal.

The first capacitor 103 (C1) is an input smoothing capacitor that smooths the full-wave-rectified power (DC signal), and is turned on/off under control of the first transistor 104. The first transistor 104 is a transistor that controls the insertion on/off of the first capacitor 103.

The switching circuit 110 includes the inductor 111 (L1), a second transistor 112 (Q2), a third transistor 113 (Q3), a fourth transistor 114 (Q4), the second capacitor 115 (C2), and a diode 116(D1).

The second capacitor 115 is a switching smoothing capacitor that is connected in parallel with the LED load 161 and that smooths the switched power, and is turned on/off under control of the second transistor 112. The second transistor 112 is a transistor that controls the insertion on/off of the second capacitor 115.

Although the example illustrated in FIG. 9 indicates the case where the second capacitor 115 is turned on/off under control of the second transistor 112, it is not necessary to provide the second transistor 115 to perform on/off control of the second capacitor 115. Alternatively, the second transistor 112 may be fixedly connected in parallel with the LED load 161.

The inductor 111 is a switching inductor, and the third transistor 113 is connected in parallel with two ends of the inductor 111. The third transistor 113 is a bypass control transistor for the inductor 111. To turn on bypassing, the third transistor 113 short-circuits the inductor 111; and, to turn off bypassing, the third transistor 113 validates the inductor 111.

The diode 116 is a switching diode. The fourth transistor 114 is a switching element that controls LED current by performing switching.

By connecting the switching circuit 110 to the LED load 161, the switching circuit 110 applies direct voltage to the LED load 161, DC flows through the LED 161, and, as a result, the LED 161 emits light.

The current-sense resistor 170 is a resistor for detecting the current value (may also be referred to as the LED current value) of current flowing through the LED load 161, and outputs a terminal voltage Vcs to the controller 150.

The controller 150 is a controller that controls the entire illuminating circuit 101. The controller 150 controls the on/off timing of each transistor. Specifically, the controller 150 generates a gate signal for each transistor, outputs the generated gate signal to the transistor, and drives the transistor, thereby controlling the on/off timing of the transistor.

The controller 150 also includes the A/D converter 151 (ADC). The controller 150 reads the terminal voltage Vcs with the use of the A/D converter 151, and calculates a current value.

The controller 150 includes a non-volatile memory 152, which is a memory that holds a lighting condition determined by a later-described lighting condition determining process. The non-volatile memory 152 includes, for example, an electrically erasable programmable read-only memory (EEPROM).

### Lighting Condition Determining Process

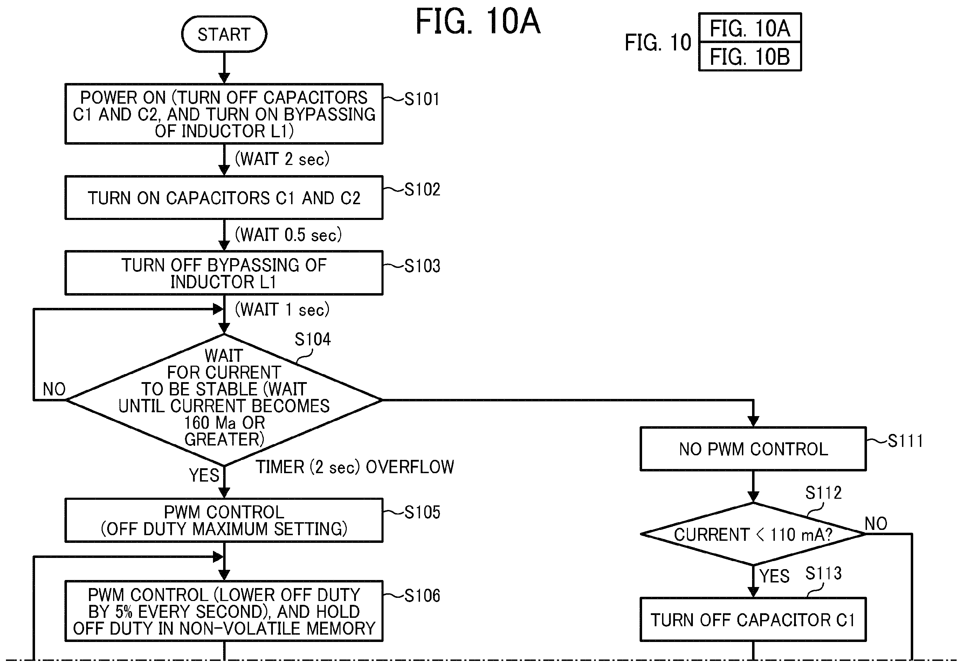

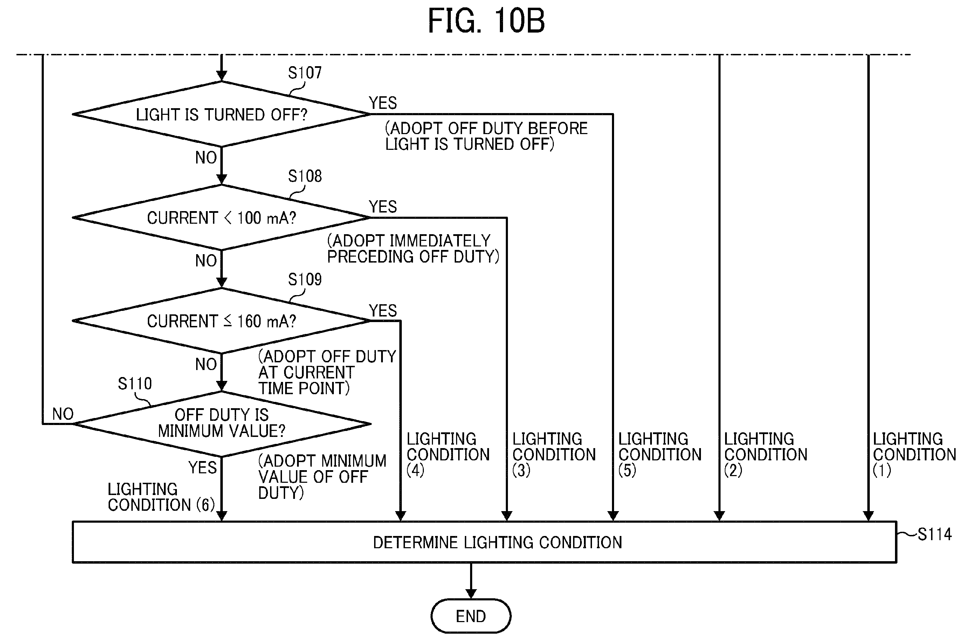

FIG. 10 is a flowchart illustrating an example of the lighting condition determining process executed by the controller 150 in the illuminating circuit 101. In the example illustrated in FIG. 10, the case where a desired current value (LED current value) is 160 mA will be described by way of example. Note that current value thresholds, standby times, and the like in FIG. 10 and the following description are only exemplary, and are not limited to those described.

Firstly, upon lighting at which power is turned on (S101), the first capacitor 103 and the second capacitor 115 are turned off under control of the first transistor 104 and the second transistor 112, respectively, and the inductor 111 enters a bypass-on state under control of the third transistor 113. This is to prevent, upon lighting, a failure in lighting the LED load 161 due to a load such as a capacitor or an inductor.

After a certain time (such as 2 sec) has elapsed after the lighting, the controller 150 controls the first transistor 104 and the second transistor 112 to turn on the first capacitor 103 and the second capacitor 115, respectively (S102), and controls the third transistor 113 to turn off bypassing of the inductor 111 (S103).

At this time, it is preferable to turn off bypassing of the inductor 111 (S103) after a certain time (such as 0.5 sec) has elapsed after turning on the first capacitor 103 and the second capacitor 115 (S102). In response to turning off bypassing of the inductor 111, a failure may occur due to a sudden change in impedance. Prior to that, the power is smoothed by inserting the first capacitor 103.

Next, control is performed to achieve a desired current value by performing PWM control. PWM control according to the embodiment performs a process of lowering the current value by lowering an off duty (increasing an on duty) from an initial value until the current value becomes a desired current value, and determining the off duty that serves as a lighting condition.

However, depending on the inverter 203, the current value may become a current value less than or equal to the desired current value without executing PWM control.

In the lighting condition determining process according to the embodiment, after the first capacitor 103 and the second capacitor 115 are turned on and bypassing of the inductor 111 is turned off (S102 and S103), the current value is monitored for a certain time (such as 2 sec) until it becomes equal to or greater than the desired current value (S104).

When the current value becomes the desired current value or greater within this certain time (Y in S104), the process proceeds to PWM control (S105 to S110).

In contrast, when the current value does not become the desired current value or greater within the certain time (timer (2 sec) overflow in S104), the lighting condition is set to indicate not performing PWM control (S111).

In this case, since the current value becomes a small value even without performing PWM control, it is determined whether the current value is less than a certain current value (referred to as a first threshold, such as 110 mA) less than the desired current value (such as 160 mA) (S112), and, when the current value is less than the first threshold, the first capacitor 103 is turned off (S113).

When the first capacitor 103 is on, there may be such an inverter 203 that the impedance becomes lower, the voltage also becomes lower, and a voltage necessary for driving the LEDs is not secured. To cope with the inverter 203 as such, the first capacitor 103 is turned off, thereby increasing the voltage and increasing the current.

In the embodiment, the lighting condition is determined by regarding the case where the current value is greater than or equal to the first threshold (Y in S112) as a lighting condition (1), and the case where the current value becomes less than the first threshold (N in S112) as a lighting condition (2) (S114).

Now, the description returns to the case where the process proceeds to PWM control (Y in S104). In PWM control (S105 to S110), the off duty is first set to 100% (maximum setting) serving as an initial value (S105).

From this state, control is performed to lower the off duty by a certain rate every certain time (114 (Q4)). For example, control is performed to lower the off duty by 5% every second (S106). At this time, the off duty is held in the non-volatile memory 152. The minimum value of the off duty is preset.

When the off duty becomes lower, the current value becomes lower. When the current value falls to the desired current value (Y in S109), the off duty at that point serves as the lighting condition. In the embodiment, the lighting condition is determined by regarding this case as a lighting condition (4) (S 114).

In control of lowering the off duty by performing PWM control, depending on the characteristics of the inverter 203, the current value may not be reduced to the desired current value even when the off duty becomes the preset minimum value (Y in S110). In this case, the minimum value (preset value) of the off duty serves as the lighting condition. In the embodiment, the lighting condition is determined by regarding this case as a lighting condition (6) (S114).

Depending on the characteristics of the inverter 203, by lowering the off duty, the current value may suddenly become lower at a certain timing (when the off duty changes to a certain value). When a current value, less than a certain current value (referred to as a second threshold, such as 100 mA) that is less than the desired current value (such as 160 mA), is detected during PWM control (Y in S108), any of the off duties before the current value becomes less than the second threshold is set as the lighting condition. For example, the off duty immediately before the current value becomes less than the second threshold can be regarded as the lighting condition. In the embodiment, the lighting condition is determined by regarding this case as a lighting condition (3) (S114).

Depending on the characteristics of the inverter 203, by gradually lowering the off duty, the lighting may be suddenly turned off (Y in S107). In this case, next time the lighting is turned on, any of the off duties before the lighting is turned off is set as the lighting condition. For example, the off duty that is two steps earlier is set as the lighting condition. For example, when the lighting is tuned off when the off duty is 50%, next time the lighting is turned on, the off duty 60%, which is two steps earlier, is set as the lighting condition. In the embodiment, the lighting condition is determined by regarding this case as a lighting condition (5) (S114).

One of the lighting conditions (1) to (6) is selected by the above-described lighting condition determining process. When the lighting condition is determined (S114), the determined lighting condition is held in the non-volatile memory 152, and, when the lighting is turned on next time onward, the lighting is turned on in accordance with the held lighting condition.

### Lighting Process after Lighting Condition is Determined

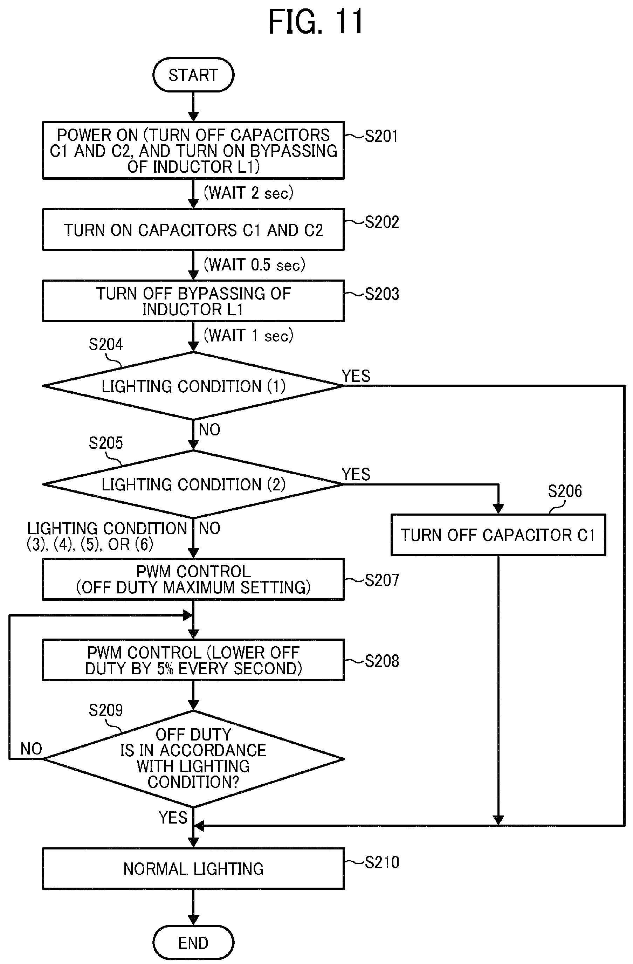

FIG. 11 is a flowchart illustrating an example of a lighting process after the lighting condition determining process is executed by the controller 150 in the illuminating circuit 101. Note that standby times and the like in FIG. 11 and the following description are only exemplary, and are not limited to those described.

Firstly, upon lighting at which power is turned on (S201), the first capacitor 103 and the second capacitor 115 are turned off under control of the first transistor 104 and the second transistor 112, respectively, and the inductor 111 enters a bypass-on state under control of the third transistor 113.

After a certain time (such as 2 sec) has elapsed after the lighting, the controller 150 controls the first transistor 104 and the second transistor 112 to turn on the first capacitor 103 and the second capacitor 115, respectively (S202), and controls the third transistor 113 to turn off bypassing of the inductor 111 (S203). So far is the same as the lighting condition determining process.

Next, in the case of the lighting condition (1) (Y in S204), normal lighting is performed (S210). In the case of the lighting condition (2) (Y in S205), the first capacitor 103 is turned off (S206), and then normal lighting is performed (S210).

In the case of the lighting condition which is performing PWM control (lighting conditions (3) to (6)) (N in S205), the off duty is set in accordance with the lighting condition determined by the lighting condition determining process. When the off duty is set immediately after the lighting, a sudden load change is applied to the inverter 203.

Therefore, even in a lighting process after the lighting condition is determined, it is preferable not to set, upon activation, the off duty in accordance with the lighting condition determined by the lighting condition determining process, but to gradually change the off duty to the off duty that is in accordance with the determined lighting condition (S207 to S209).

For example, when the off duty in accordance with the lighting condition is 50%, control is performed to gradually lower the off duty from 100% by a certain value (rate) every certain time. For example, control is performed to lower the off duty by 5% every second. With the foregoing process, the illuminating lamp can be lighted in accordance with the lighting condition selected by the lighting condition determining process (S210).

There are two conceivable cases with regard to the frequency of PWM control: one case of synchronizing the frequency with the frequency of the inverter 203, and the other case of setting the frequency to a constant frequency asynchronous with the frequency of the inverter 203.

Normally, it is preferable to synchronize the frequency of PWM control with the frequency of the inverter 203 since this can follow frequency variations. However, there may be a case where the frequency of the inverter 203 varies greatly due to a load change caused by PWM control, and, to cope with such a case, a circuit for detecting the frequency (frequency detecting circuit) is necessary.

Therefore, it is also preferable to set the frequency of PWM control to a constant frequency asynchronous with the frequency of the inverter 203. In doing so, the frequency detecting circuit becomes unnecessary, the circuit can be simplified, and even a great frequency change can be coped. Since the illuminating circuit 101 according to the embodiment includes the first capacitor 103, the influence of the frequency of PWM control on the inverter 203 can be minimized.

The illuminating lamp according to the above-described embodiment can be lighted in accordance with a lighting condition that conforms to the characteristics of the inverter. For example, the illuminating lamp can be lighted with the optimum power, regardless of the lighting method of the inverter, such as the active power constant type, apparent power constant type, or constant current type.

Since the above-mentioned optimum lighting control is realized not by switching between a plurality of lighting units, but with one lighting unit (illuminating circuit), the circuit dimensions can be reduced, thereby achieving cost reduction.

In the above-described embodiments, a certain value to be used, such as a certain rate or certain time for lowering the off duty, or a certain value such as a certain current value, may be previously determined, for example, by a manufacturer.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

## Claims

1. An illuminating lamp (100) comprising:
a rectifier (102) that performs full-wave rectification of an input from a fluorescent lamp ballast (203);
a lighting unit that controls lighting of a semiconductor light-emitting element part (160); and
a current value detector (170, 150) that detects a current value of current flowing through the semiconductor light-emitting element part (160),
wherein the lighting unit includes
an input smoothing capacitor (103 (C1)) that smooths an input from the rectifier (102), the input smoothing capacitor (103 (C1)) being on/off controllable,
a switching circuit (110) at least including a switching inductor (111 (L1)) provided to be bypass-on/off switchable, a switching smoothing capacitor (115 (C2)) connected in parallel with the semiconductor light-emitting element part (160), and a switching element (114 (Q4)) that controls current flowing through the semiconductor light-emitting element part (160), and
a controller (150) that turns on the input smoothing capacitor (103 (C1)) and turns off bypassing of the switching inductor (111 (L1)) after the semiconductor light-emitting element part (160) is lighted, the input smoothing capacitor (103 (C1)) being off and bypassing of the switching inductor (111 (L1)) being on at start of the lighting, and determines a lighting condition by performing PWM control of the switching element (114 (Q4)).

2. The illuminating lamp (100) according to Claim 1, wherein, in the PWM control, the controller (150) lowers an off duty of the switching element (114 (Q4)) from an initial value by a certain rate at a certain interval, and determines, as the lighting condition, an off duty at which the current value detected by the current value detector (170, 150) falls to a certain current value.

3. The illuminating lamp (100) according to Claim 2, wherein, in the PWM control, when the current value detected by the current value detector (170, 150) does not fall to the certain current value even when the off duty is lowered to a preset minimum value, the controller (150) determines the minimum value of the off duty as the lighting condition.

4. The illuminating lamp (100) according to Claim 1, wherein, after the controller (150) turns on the input smoothing capacitor (103 (C1)) and turns off bypassing of the switching inductor (111 (L1)), when the current value detected by the current value detector (170, 150) does not exceed a certain current value within a certain time, the controller (150) determines, as the lighting condition, not performing the PWM control.

5. The illuminating lamp (100) according to Claim 4, wherein, when the current value detected by the current value detector (170, 150) is less than a first threshold set to a value lower than the certain current value, the controller (150) turns off the input smoothing capacitor (103 (C1)).

6. The illuminating lamp (100) according to Claim 2, wherein, in the PWM control, while the off duty is being changed, when the current value detected by the current value detector (170, 150) is less than a second threshold set to a value lower than the certain current value, or when the lighted semiconductor light-emitting element part (160) is turned off, the controller (150) selects one off duty from off duties before being changed and determines the selected off duty as the lighting condition.

7. The illuminating lamp (100) according to any one of Claims 2 to 6, wherein
the controller (150) includes a memory (152) that stores the determined lighting condition, and
when the lighting condition indicates to perform the PWM control, at a time of lighting the semiconductor light-emitting element part (160) after storing the lighting condition in the memory, the controller (150) sets an off duty in accordance with the stored lighting condition by lowering the off duty from the initial value by the certain rate at the certain interval.

8. The illuminating lamp (100) according to Claim 1, wherein the controller (150) synchronizes a frequency of the PWM control with a frequency of the fluorescent lamp ballast (203) or sets the frequency of the PWM control to a constant frequency asynchronous with the frequency of the fluorescent lamp ballast (203).

9. A lighting device (300) comprising:
the illuminating lamp (100) according to any one of Claims 1 to 8; and
a lamp fitting (200) to which the illuminating lamp (100) is connected.

10. A method of lighting an illuminating lamp (100) that includes
a rectifier (102) that performs full-wave rectification of an input from a fluorescent lamp ballast (203);
a lighting unit that controls lighting of a semiconductor light-emitting element part (160); and
a current value detector (170, 150) that detects a current value of current flowing through the semiconductor light-emitting element part (160),
wherein the lighting unit includes
an input smoothing capacitor (103 (C1)) that smooths an input from the rectifier (102), the input smoothing capacitor (103 (C1)) being on/off controllable, and
a switching circuit (110) at least including a switching inductor (111 (L1)) provided to be bypass-on/off switchable, a switching smoothing capacitor (115 (C2)) connected in parallel with the semiconductor light-emitting element part (160), and a switching element (114 (Q4)) that controls current flowing through the semiconductor light-emitting element part (160), and
wherein the method comprises:
turning on the input smoothing capacitor (103 (C1)) and turning off bypassing of the switching inductor (111 (L1)) after the semiconductor light-emitting element part (160) is lighted, the input smoothing capacitor (103 (C1)) being off and bypassing of the switching inductor (111 (L1)) being on at start of the lighting; and
determining a lighting condition by performing PWM control of the switching element (114 (Q4)).
